# EUROPÄISCHE PATENTSCHRIFT

(11) **EP 2 726 388 B1**
(45) Veröffentlichungstag und Bekanntmachung des Hinweises auf die Patenterteilung: **05.08.2015**
(21) Anmeldenummer: 12743353.0
(22) Anmeldetag: 27.06.2012
(51) Int. Cl.: B65G 23/08, H02K 5/22

(54) **FÖRDERROLLE**
CONVEYOR ROLLER
ROULEAU DE TRANSPORT

(30) Priorität: 29.06.2011 AT 9492011
(43) Veröffentlichungstag der Anmeldung: 07.05.2014
(73) Patentinhaber: TGW Mechanics GmbH, 4600 Wels (AT)
(72) Erfinder: WOLKERSTORFER, Christoph, 4600 Wels (AT); REISCHL, Josef, 4623 Gunskirchen (AT)
(74) Vertreter: Burger, Hannes
(86) Internationale Anmeldenummer: PCT/AT2012/050086
(87) Internationale Veröffentlichungsnummer: WO 2013/000006

(56) Entgegenhaltungen:
- EP-A1- 1 209 101
- EP-A1- 1 909 362
- WO-A2-2011/029119

## Beschreibung

Die Erfindung betrifft eine Förderrolle, welche eine stillstehende Rollenachse, Statorwicklungen eines Motors, welche mit der Rollenachse drehfest verbunden sind, und eine Steuerelektronik für den genannten Motor umfasst, welche mit der Rollenachse drehfest verbunden ist. Weiterhin umfasst die Förderrolle einen drehbar um die Rollenachse gelagerten Rollenmantel welcher drehfest mit einem Rotor des genannten Motors verbunden ist.

Eine solche Förderrolle ist an sich bekannt und wird häufig in Förderanlagen verschiedenster Art eingesetzt, beispielsweise in einer Lagerhalle, einer Produktionsstätte oder auch in einem Post- oder Gepäckverteilsystem. Solche Förderanlagen dienen zum komfortablen Fördern und Sortieren von mitunter sehr schweren Lasten. Bei Förderanlagen mit Förderrollen der genannten Art ("Rollenförderer") wird das Fördergut durch einzelne, mit dem Fördergut temporär in Kontakt stehende, Förderrollen transportiert. Neben den eingangs erwähnten motorisierten Förderrollen kann eine Förderanlage zusätzlich auch leerlaufende Förderrollen aufweisen oder auch Förderrollen die über einen Riemen von einer motorisierten Förderrolle angetrieben werden.

Ein etwas schwierigeren Fertigungsschritt bei der Herstellung einer Förderrolle besteht in der elektrischen Verbindung der Statorwicklungen mit der Steuerelektronik zur Ansteuerung des Rollenmotors, beziehungsweise auch in der elektrischen Verbindung der Steuerelektronik nach außen hin.

Aus dem Stand der Technik ist dazu beispielsweise die JP 2003102143 A bekannt, bei der ein Anschlusskabel der Statorwicklung durch eine hohle Rollenachse geführt wird. Weiterhin ist aus der EP 1 845 604 A2 eine weitere Förderrolle bekannt, bei der ein Anschlusskabel durch eine hohle Rollenachse geführt ist. Weiterhin ist aus der EP 1 845 604 A2 bekannt, die Statorwicklungen über Schneidklemmverbindungen zu kontaktieren und über Steckkontakte mit einem weiteren Leitungsabschnitt zu verbinden.

Die WO 2011/029119 A2 offenbart eine Förderanlage mit Förderrollen, welche eine elektrische Kontaktierungsvorrichtung zum Anschluss einer Antriebselektronik an das Bussystem, einen Rollenkörper und einen innerhalb von diesem angeordneten Antriebsmotor umfassen. Die Förderrollen sind über eine Lagervorrichtung mit einem der Enden an einem der Rahmenprofile montierbar, wobei die motorisierte Förderrolle bei der Montagebewegung relativ zum Rahmenprofil die Kontaktierungsvorrichtung des Bussystems kontaktiert.

Die EP 1 209 101 A1 offenbart schließlich ein weiteres Beispiel für eine elektrisch angetriebene Förderrolle mit einer integrierten Antriebsschaltung zur Ansteuerung eines Antriebsmotors der Förderrolle.

Nachteilig an den bekannten Lösungen sind die vergleichsweise aufwändigen Herstellungsschritte zur elektrischen Kontaktierung der Statorwicklungen mit einer Steuerelektronik sowie die elektrische Verbindung der Förderrolle nach außen hin.

Die Aufgabe der Erfindung ist es daher, eine verbesserte Förderrolle anzugeben. Insbesondere sollen die oben erwähnten Nachteile überwunden und die Herstellungsschritte zur Herstellung einer Förderrolle vereinfacht werden.

Die Aufgabe wird mit erfindungsgemäßen einer Förderrolle nach Anspruch 1 gelöst, umfassend eine zwischen den Statorwicklungen und der Steuerelektronik sowie konzentrisch zur Rollenachse angeordnete und mit dieser drehfest verbundenen Hülse, in welche elektrische Leiter eingebettet oder eingedrückt sind, die für die elektrische Kontaktierung der Statorwicklungen mit der Steuerelektronik eingerichtet sind und die Steckkontakte umfassen, welche zum Einstecken in eine die Steuerelektronik tragende, erste Leiterplatte (Stifte werden verlötet) oder eine darauf angeordnete Steckvorrichtung (Stifte werden nur gesteckt, jedoch nicht verlötet) vorbereitet sind.

Erfingdungsgemäß wird damit erreicht, dass die Statorwicklungen auf einfache Weise mit einer Steuerelektronik verbunden werden können. Weiterhin wird die elektrische Verbindung der Förderrolle nach außen hin vereinfacht Durch die Einbettung der elektrischen Leiter in das Material der Hülse sind die elektrischen Leiter gut vor Beschädigung geschützt, insbesondere bei der Manipulation der Hülse sowie bei der Montage derselben. Des Weiteren kann die Hülse im Wesentlichen in einem Arbeitsschritt hergestellt werden, wenn die elektrischen Leiter in die Hülse eingebettet werden. Mit Hilfe der Steckkontakte können die elektrischen Leiter darüber hinaus besonders gut mit der Steuerelektronik verbunden werden.

Vorteilhafte Ausgestaltungen und Weiterbildungen der Erfindung sind Gegenstand der Unteransprüche.

Günstig ist es, wenn die elektrischen Leiter längs zur Rollenachse, insbesondere parallel zu dieser, ausgerichtet sind. Auf diese Weise braucht die Hülse nur eine geringe Wandstärke aufzuweisen, womit der Materialeinsatz für dieselbe reduziert wird.

Günstig ist es auch, wenn die elektrischen Leiter einen radial verlaufenden Abschnitt umfassen. Damit ist es möglich, die Anschlüsse der elektrischen Leiter nach außen zu verlegen und somit einerseits mehr Abstand zwischen den Anschlüssen, andererseits aber auch mehr Abstand zur Rollenachse herzustellen, womit die elektrische Kontaktierung der Hülse vereinfacht werden kann.

In einer besonders vorteilhaften Ausführungsform umfasst die Förderrolle eine statorseitig angeordnete, zweite Leiterplatte, welche Leiterbahnen zur elektrischen Verbindung der Statorwicklungen mit der genannten Hülse umfasst. Auf diese Weise werden die Anschlüsse für die Statorwicklungen radial nach außen geführt. Dadurch entsteht einerseits mehr Abstand zwischen den Anschlüssen, andererseits aber auch mehr Abstand zur Rollenachse, womit die elektrische Kontaktierung der Statorwicklungen vereinfacht werden kann.

Vorteilhaft ist es, wenn die elektrischen Leiter Steckkontakte umfassen, welche zum Einstecken in die zweite Leiterplatte (Stifte werden verlötet) oder eine darauf angeordnete Steckvorrichtung (Stifte werden nur gesteckt, jedoch nicht verlötet) vorbereitet sind. Auf diese Weise können die elektrischen Leiter besonders gut mit den Statorwicklungen verbunden werden.

In einer besonders vorteilhaften Ausführungsform umfasst die Förderrolle ein Wälzlager, welches auf der genannten Hülse angeordnet ist. Auf diese Weise kann die Hülse einen Doppelnutzen erbringen, nämlich einerseits als Träger der elektrischen Leiter, andererseits aber auch als Träger des Wälzlagers fungieren. Insbesondere wenn die Hülse beispielsweise aus Kunststoff oder Keramik gefertigt ist, lässt sich ein Lagersitz relativ einfach durch Spritzen oder Gießen herstellen.

Besonders vorteilhaft ist es, wenn das genannte Wälzlager zur Lagerung des Rollenmantels drehbar zur Rollenachse der Förderrolle eingerichtet ist. Da die Hülse neben den Statorwicklungen angeordnet ist, eignet sie sich von ihrer Position her gut für die Lagerung des Rollenmantels. Das Wälzlager kann dabei unmittelbar den Rollenmantel lagern oder mittelbar, beispielsweise über ein am Außenring des Wälzlagers angeordnetes Zwischenelement oder ein Zwischenrohr, welches zum Beispiel den äußeren Umfang einer Motoreinheit bilden kann.

Vorteilhaft ist es schließlich, wenn die Hülse aus Kunststoff oder Keramik gefertigt, insbesondere gespritzt oder gegossen, ist. Einerseits sind Kunststoffe und Keramik gute elektrische Isolatoren, weswegen sich diese Materialien besonders zur Aufnahme elektrischer Leiter eignen, andererseits können diese auch gespritzt oder gegossen werden, wodurch die elektrischen Leiter direkt bei der Fertigung der Hülse in das Material derselben eingebettet werden können. In einer weiteren vorteilhaften Variante ist das Material der Hülse mit Füllstoffen, beispielsweise Glasfasern oder Reststoffen, versetzt.

Zum besseren Verständnis der Erfindung wird diese anhand der nachfolgenden Figuren näher erläutert.

Es zeigen jeweils in stark schematisch vereinfachter Darstellung:
- Fig. 1: eine beispielhafte Förderrolle im Längsschnitt;
- Fig. 2a: eine beispielhafte Motoreinheit im Seitenansicht;
- Fig. 2b: eine beispielhafte Motoreinheit in Längsschnitt;
- Fig. 3: die Motoreinheit aus Fig. 2a und 2b in Schrägansicht;
- Fig. 4: die Motoreinheit aus Fig. 2a uns 2b in Explosionsdarstellung;
- Fig. 5: ein weiteres Beispiel einer Motoreinheit mit Ausgleichsringen im Längsschnitt und
- Fig. 6: die Motoreinheit aus Fig. 5 in Schrägansicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

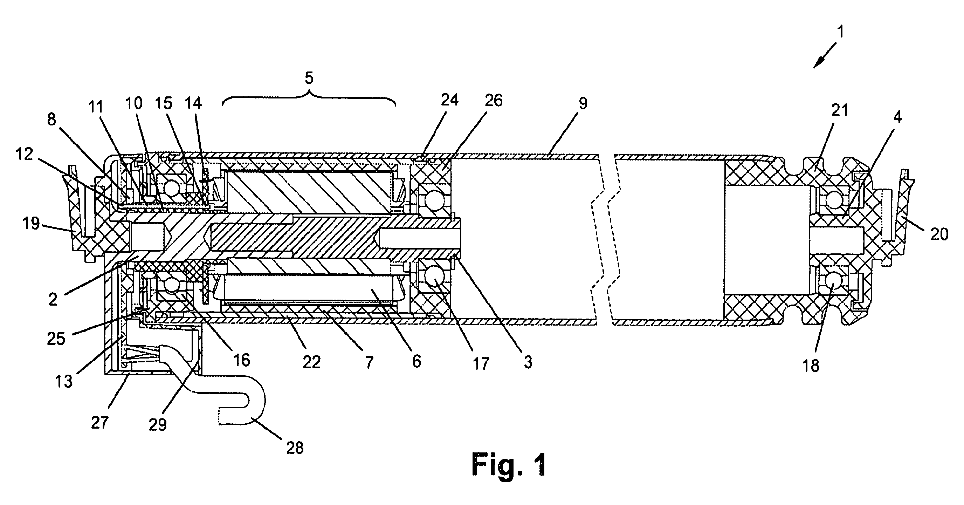

Fig. 1 zeigt eine beispielhafte Förderrolle 1 im Längsschnitt. Diese umfasst eine stillstehende, aus mehreren Teilen 2, 3, 4 bestehende Rollenachse, Statorwicklungen 6 eines Motors 5, welche mit der Rollenachse 2, 3 drehfest verbunden sind, eine Steuerelektronik 8 für den genannten Motor 5, welche mit der Rollenachse 2 drehfest verbunden ist und einen drehbar um die Rollenachse 2, 3, 4 gelagerten Rollenmantel 9 welcher drehfest mit einem Rotor 7 des genannten Motors 5 verbunden ist. Zusätzlich umfasst die Förderrolle 1 eine zwischen den Statorwicklungen 6 und der Steuerelektronik 8 sowie konzentrisch zur Rollenachse 2 angeordnete und mit dieser drehfest verbundenen Hülse 10, welche elektrische Leiter 11 umfasst, die für die elektrische Kontaktierung der Statorwicklungen 6 mit der Steuerelektronik 8 eingerichtet sind.

Vorzugsweise sind die elektrischen Leiter 11 in das Material der Hülse 10 eingebettet. Dabei ist es insbesondere von Vorteil, wenn die Hülse 10 aus Kunststoff oder Keramik gefertigt ist. Beispielsweise kann die Hülse 10 aus Kunststoff gespritzt sein und mit Füllstoffen versetzt sein, etwa mit Glasfasern, Reststoffen und dergleichen.

Die elektrischen Leiter 11 umfassen in diesem Beispiel Steckkontakte 12, welche zum Einstecken und Einlöten in eine die Steuerelektronik 8 tragende, erste Leiterplatte 13 vorbereitet sind. Alternativ wäre auch vorstellbar, dass die Steckkontakte 12 zum Einstecken in eine auf der Leiterplatte 13 angeordnete Steckvorrichtung (nicht dargestellt) vorbereitet sind. Da das Verlöten der Steckkontakte 12 in diesem Fall entfällt, kann die Montage der Förderrolle 1 unter Umständen vereinfacht werden.

In diesem Beispiel sind die elektrischen Leiter 11 längs zur Rollenachse 2, im Speziellen parallel zu dieser, ausgerichtet. Dies ist zwar vorteilhaft aber nicht zwingend. Denkbar wäre auch, dass die elektrischen Leiter 11 einen radial verlaufenden Abschnitt umfassen, sodass die Statorwicklungen 6 leichter kontaktiert werden können.

Zu demselben Zweck umfasst die Förderrolle 1 in diesem Beispiel eine statorseitig angeordnete, zweite Leiterplatte 14, welche Leiterbahnen zur elektrischen Verbindung der Statorwicklungen 6 mit der genannten Hülse 10 umfasst. Vorteilhaft umfassen die elektrischen Leiter 11 dann Steckkontakte 15, welche zum Einstecken und Einlöten in die zweite Leiterplatte 14 vorbereitet sind. Alternativ wäre auch vorstellbar, dass die Steckkontakte 15 zum Einstecken in eine auf der Leiterplatte 14 angeordnete Steckvorrichtung (nicht dargestellt) vorbereitet sind. Da das Verlöten der Steckkontakte 15 in diesem Fall entfällt, kann die Montage der Förderrolle 1 unter Umständen vereinfacht werden.

Weiterhin umfasst die Förderrolle 1 ein Wälzlager 16, welches auf der genannten Hülse 10 angeordnet ist. Konkret ist das Wälzlager 16 gemeinsam mit den Lagern 17 und 18 zur Lagerung des Rollenmantels 9 drehbar zur Rollenachse 2, 3, 4 eingerichtet.

Zudem umfasst die Förderrolle 1 zwei Haltevorrichtungen 19 und 20, mit denen die Förderrolle 1 in einem nicht dargestellten Rahmen befestigt, konkret eingeclipst, werden kann. Während die linke Haltevorrichtung 19 in der Rollenachse 2 befestigt ist, bestehen die Rollenachse 4 und die rechte Haltevorrichtung 20 aus einem Stück, welches vorzugsweise aus Kunststoff gespritzt ist. Selbstverständlich könnten aber auch die Rollenachse 4 und die Haltevorrichtung 20 zweitteilig aufgebaut sein.

Am Lager 18 ist ein Rollenmantelträger 21 montiert, welcher einerseits der Befestigung des Rollenmantels 9 dient, in diesem Beispiel aber auch zwei optionale Rillen für Rundriemen umfasst, welche dem Antrieb benachbarter Förderrollen 1 dienen. Es könnte beispielsweise aber auch ein Keilriemen oder ein Keilrippenriemen (Poly-V-Riemen) vorgesehen sein.

Auf der linken Seite ist der Rollenmantel 9 auf einem Motorrohr 22 montiert, welches den äußeren Umfang der Motoreinheit 23 bildet. Zur drehfesten Befestigung des Rollenmantels 9 ist dieser in Vertiefungen beziehungsweise Ausnehmungen 24 des Motorrohrs 22 eingedrückt. Das Motorrohr 22 ist in diesem Beispiel über einen linken Motorrohrträger 25 und einen rechten Motorrohrträger 26 auf den Lagern 16 und 17 montiert. Denkbar wäre natürlich auch, dass das Motorrohr 22 direkt auf den Lagern 16 und 17 sitzt.

Schließlich ist in der Fig. 1 ein Gehäusedeckel 27 dargestellt, welcher mit der Rollenachse 2 eine Einheit bildet. Selbstverständlich könnten der Gehäusedeckel 27 und die Rollenachse 2 auch getrennt aufgebaut sein. Aus dem Gehäusedeckel 27 ist ein Anschlusskabel 28 herausgeführt, welches mit der Leiterplatte 13 verlötet ist und dem elektrischen Anschluss der Förderrolle 1 dient. Auf der rechten Seite ist das Gehäuse schließlich mit einem Deckel 29 verschlossen.

Wie in der Fig. 1 gut erkennbar ist, besteht die Rollenachse in diesem Beispiel aus mehreren Teilen 2, 3 und 4. Dies ist keinesfalls zwingend. Vielmehr wäre auch vorstellbar, dass die Teile 2 und 3 beziehungsweise auch die Teile 2, 3 und 4 aus einem gemeinsamen Bauteil bestehen. In letzterem Fall weist die Förderrolle dann eine durchgehende Rollenachse auf.

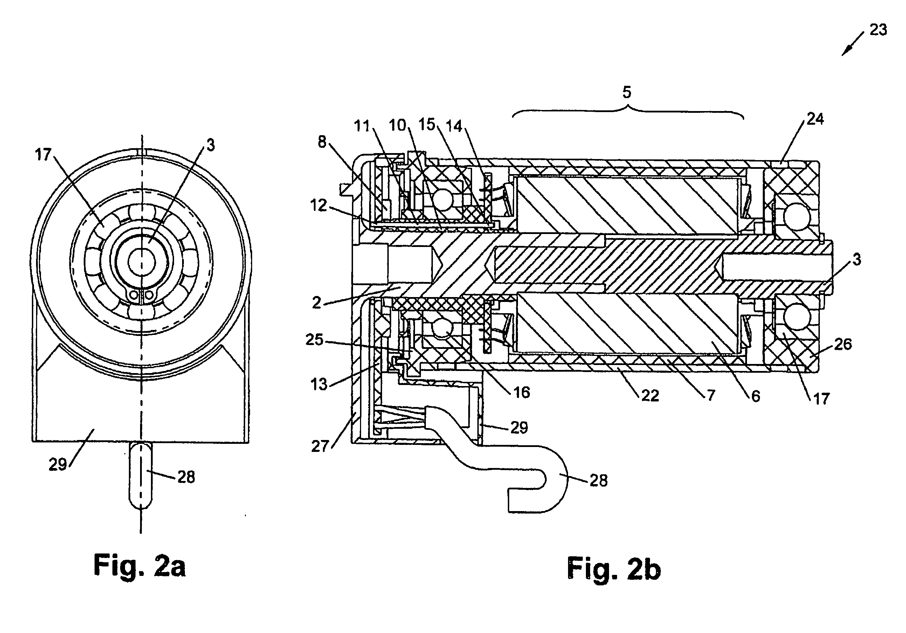

Die Figuren 2a und 2b zeigen die Motoreinheit 23 im Längsschnitt (Fig. 2b) und in Seitenansicht (Fig. 2a) etwas vergrößert gegenüber der Fig. 1. Dabei ist gut zu erkennen, dass die Motoreinheit 23 eine eigenständige Baueinheit bildet, die mit verschiedenen Rollenmänteln 9 kombiniert werden kann. Beispielsweise können die Rollenmäntel 9 verschieden lang, verschieden dick oder aus unterschiedlichen Materialien bestehen, um verschiedenen Anforderungen gerecht zu werden. Insbesondere können die Rollenmäntel 9 auch eine unterschiedliche Oberfläche beziehungsweise Oberflächenstruktur aufweisen.

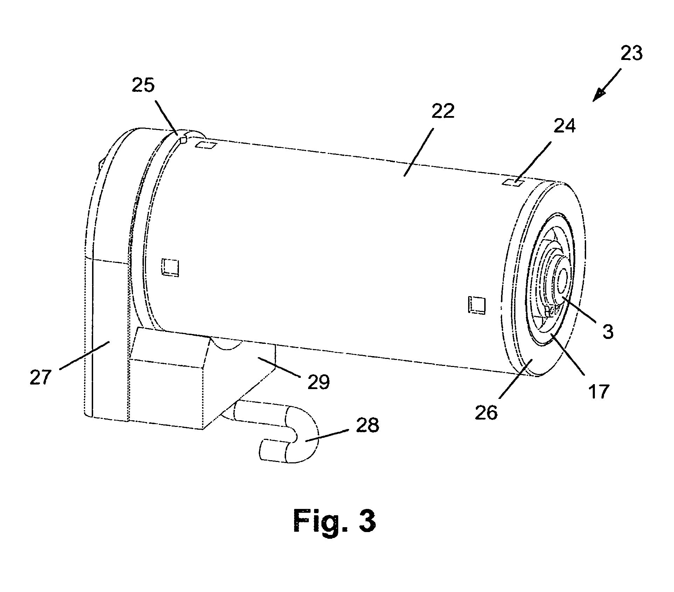

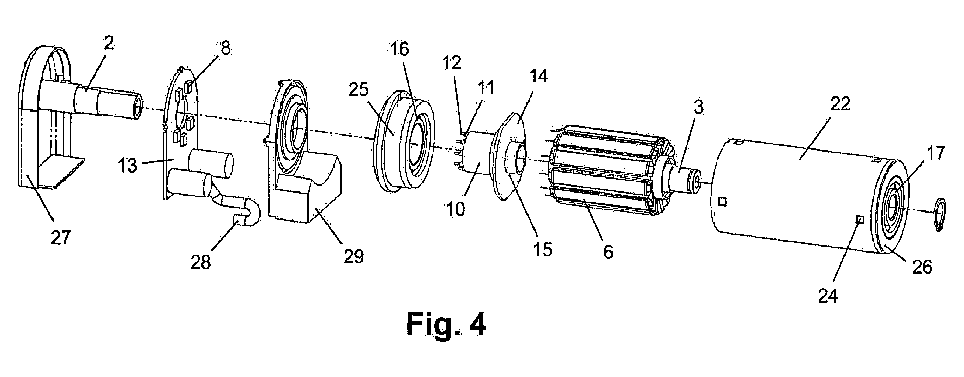

Fig. 3 zeigt die Motoreinheit 23 nun in Schrägansicht, Fig. 4 in Explosionsdarstellung. Aus Fig. 4 wird insbesondere deutlich, dass die elektrischen Leiter 11 um den ganzen Umfang der Hülse 10 verteilt sind. Dies ist zwar ein vorteilhaftes Merkmal, denkbar ist aber auch, dass die elektrischen Leiter 11 in einem Bereich konzentriert sind. Des Weiteren sind die elektrischen Leiter 11 nicht zwangsläufig in das Material der Hülse 10 eingebettet, sondern könnten beispielsweise auch in Längsrillen am Umfang der Hülse 10 eingedrückt sein.

Vorzugsweise sind die Leiter 11 metallische Stifte, welche auch die Steckkontakte 12 und 15 bilden. Denkbar wäre aber auch, dass die elektrischen Leiter 11 durch gesonderte Drähte oder Kabel gebildet sind, auf welche Steckkontakte beispielsweise aufgepresst oder aufgelötet sind. Dieselbe technische Lehre ist analog auch auf die Anschlussdrähte der Statorwicklungen 6 anwendbar.

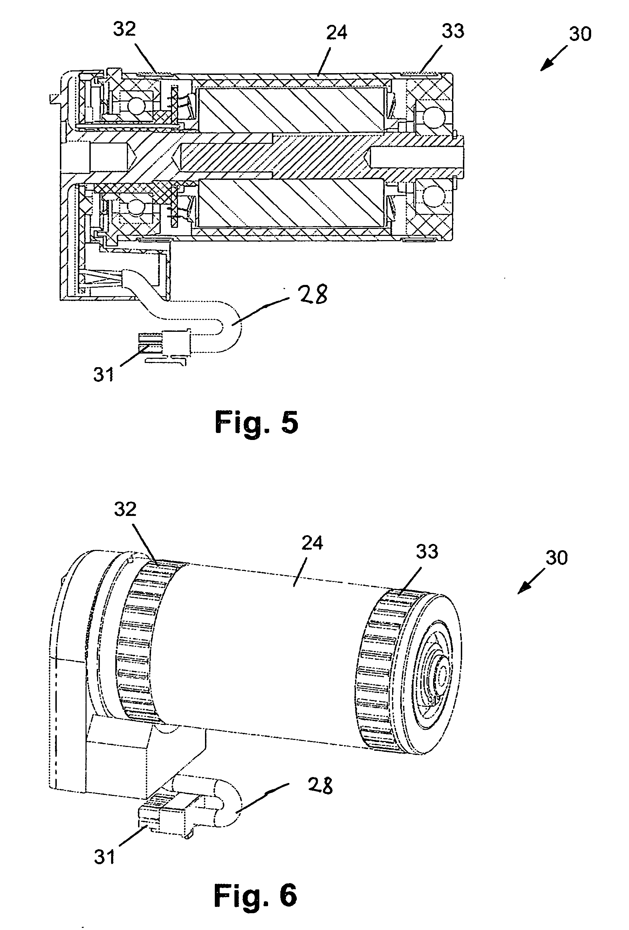

Die Figuren 5 und 6 zeigen eine Variante der Motoreinheit 30 (Fig. 5 im Längsschnitt, Fig. 6 in Schrägansicht), welche sich von der Motoreinheit 23 lediglich durch zwei Merkmale unterscheidet. Einerseits ist am Kabel 28 ein Stecker 31 angebracht, mit dessen Hilfe die Förderrolle 1 elektrisch kontaktiert werden kann. Andererseits befinden sich auf dem Motorrohr 22 zwei Ausgleichselemente 32 und 33, welche dem Toleranzausgleich zwischen Motorrohr 22 und Rollenmantel 9 dienen, sodass das Motorrohr 22 leichter in den Rollenmantel 9 eingeschoben werden kann, beziehungsweise eine aufwändige Bearbeitung derselben am Umfang, beispielsweise durch Drehen, entfallen kann. Die Ausgleichselemente 32 und 33 können wie dargestellt durch eigens dafür vorgesehene Bauteile gebildet sein, beispielsweise aber auch durch O-Ringe, Kupferringe und dergleichen.

Die Ausführungsbeispiele zeigen mögliche Ausführungsvarianten einer erfindungsgemäßen Förderrolle 1, wobei an dieser Stelle bemerkt sei, dass die Erfindung nicht auf die speziell dargestellten Ausführungsvarianten derselben eingeschränkt ist.

Insbesondere kann die Steuerelektronik 8 auch auf der statorseitigen Leiterplatte 14 angeordnet sein und die Leiterplatte 13 vorwiegend oder ausschließlich der elektrischen Kontaktierung der Förderrolle 1 nach außen hin dienen, beispielsweise wie dargestellt durch Anlöten eines Kabels 28 oder aber auch durch Vorsehen nach außen geführter und auf der Leiterplatte 13 angeordneter Steckkontakte. Diese können direkt durch Leiterbahnen auf der Leiterplatte 13 gebildet sein, oder aber auch durch einen auf die Leiterplatte 13 gelöteten Stecker oder eine aufgelötete Buchse.

Der Ordnung halber sei abschließend darauf hingewiesen, dass zum besseren Verständnis des Aufbaus der Förderrolle 1 diese in den Figuren schematisch dargestellt ist und in der Realität daher mehr Bauteile als dargestellt, weniger Bauteile als dargestellt oder auch andere Bauteile umfassen kann.

### Bezugszeichenaufstellung

- 1: Förderrolle
- 2: erster Teil der Rollenachse
- 3: zweiter Teil der Rollenachse
- 4: dritter Teil der Rollenachse
- 5: Motor

- 6: Statorwicklungen
- 7: Rotor
- 8: Steuerelektronik
- 9: Rollenmantel
- 10: Hülse

- 11: elektrische Leiter
- 12: Steckkontakt
- 13: Leiterplatte Steuerelektronik
- 14: statorseitige Leiterplatte
- 15: Steckkontakt

- 16: Wälzlager
- 17: Wälzlager
- 18: Wälzlager
- 19: Haltevorrichtung
- 20: Haltevorrichtung

- 21: Rollenmantelträger
- 22: Motorrohr
- 23: Motoreinheit
- 24: Vertiefung oder Ausnehmung
- 25: linker Motorrohrträger

- 26: rechter Motorrohrträger
- 27: Gehäusedeckel
- 28: Anschlusskabel
- 29: Deckel
- 30: Motoreinheit

- 31: Stecker
- 32: Ausgleichselement
- 33: Ausgleichselement

## Patentansprüche

1. Förderrolle (1), umfassend:
- eine stillstehende Rollenachse (2, 3, 4),
- Statorwicklungen (6) eines Motors (5), welche mit der Rollenachse (2, 3) drehfest verbunden sind,
- eine Steuerelektronik (8) für den genannten Motor (5), welche mit der Rollenachse (2) drehfest verbunden ist und
- einen drehbar um die Rollenachse (2, 3, 4) gelagerten Rollenmantel (9) welcher drehfest mit einem Rotor (7) des genannten Motors (5) verbunden ist,
**gekennzeichnet durch**
eine zwischen den Statorwicklungen (6) und der Steuerelektronik (8) sowie konzentrisch zur Rollenachse (2) angeordnete und mit dieser drehfest verbundenen Hülse (10), in welche elektrische Leiter (11) eingebettet oder eingedrückt sind, die für die elektrische Kontaktierung der Statorwicklungen (6) mit der Steuerelektronik (8) eingerichtet sind und Steckkontakte (12) umfassen, welche zum Einstecken in eine die Steuerelektronik (8) tragende, erste Leiterplatte (13) oder eine darauf angeordnete Steckvorrichtung vorbereitet sind.

2. Förderrolle (1) nach Anspruch 1, **dadurch gekennzeichnet, dass** die elektrischen Leiter (11) längs zur Rollenachse (2) ausgerichtet sind.

3. Förderrolle (1) nach Anspruch 1, **dadurch gekennzeichnet, dass** die elektrischen Leiter (11) einen radial verlaufenden Abschnitt umfassen.

4. Förderrolle (1) nach einem der Ansprüche 1 bis 3, **gekennzeichnet durch** eine statorseitig angeordnete, zweite Leiterplatte (14), welche Leiterbahnen zur elektrischen Verbindung der Statorwicklungen (6) mit der genannten Hülse (10) umfasst.

5. Förderrolle (1) nach Anspruch 4, **dadurch gekennzeichnet, dass** die elektrischen Leiter (11) Steckkontakte (15) umfassen, welche zum Einstecken in die zweite Leiterplatte (14) oder eine darauf angeordnete Steckvorrichtung vorbereitet sind.

6. Förderrolle (1) nach einem der Ansprüche 1 bis 5, **gekennzeichnet durch** ein Wälzlager (16), welches auf der genannten Hülse (10) angeordnet ist

7. Förderrolle (1) nach Anspruch 6, **dadurch gekennzeichnet, dass** das genannte Wälzlager (16) zur Lagerung des Rollenmantels (9) drehbar zur Rollenachse (2,3,4) der Förderrolle (1) eingerichtet ist.

8. Förderrolle (1) nach einem der Ansprüche 1 bis 7, **dadurch gekennzeichnet, dass** die Hülse (10) aus Kunststoff oder Keramik gefertigt ist.

## Claims

1. Conveyor roller (1) comprising:
a stationary roller axle (2, 3, 4),
stator windings (6) of a motor (5) that are non-rotatably fixed to the roller axle (2, 3),
a control electronics (8) for said motor (5) that is non-rotatably fixed to the roller axle (2) and
a roller tube (9) which is pivotally supported in relation to the roller axle (2, 3, 4) and which is fixedly connected to a rotor (7) of said motor (5), **characterized by** a sleeve (10) which is arranged between the stator windings (6) and the control electronics (8) and which is arranged concentrically with respect to the roller axle (2) and connected thereto in a non-rotatable manner, in which sleeve (10) electrical leads (11) are embedded or pressed that are designed for electrically contacting the stator windings (6) with the control electronics (8) and that comprise plug connections (12) which are designed for being plugged into a first circuit board (13) carrying the control electronics (8) or into a plug connector arranged on said first circuit board (13).

2. Conveyor roller (1) according to claim 1, **characterized in that** the electrical leads (11) are arranged lengthwise to the roller axle (2).

3. Conveyor roller (1) according to claim 1, **characterized in that** the electrical leads (11) comprise a section running radially.

4. Conveyor roller (1) according to one of claims 1 to 3, **characterized by** a second circuit board (14) which is arranged on the side of the stator and which comprises conducting paths for electrically contacting the stator windings (6) with said sleeve (10).

5. Conveyor roller (1) according to claim 4, **characterized in that** the electrical leads (11) comprise plug contacts (15) which are designed for being plugged into the second circuit board (14) or into a plug connection arranged thereon.

6. Conveyor roller (1) according to one of claims 1 to 5, **characterized by** a roller bearing (16) which is arranged on said sleeve (10).

7. Conveyor roller (1) according to claim 6, **characterized in that** said roller bearing (16) is configured for pivotally bearing the roller tube (9) with respect to the roller axle (2, 3, 4) of the conveyor roller (1).

8. Conveyor roller (1) according to one of claims 1 to 7, **characterized in that** the sleeve (10) is made of a plastic material or ceramic.

## Revendications

1. Rouleau de transport (1) comprenant:
- un axe de rouleau (2, 3, 4) immobile,
- des bobines de stator (6) d'un moteur (5) qui sont solidaires en rotation avec l'axe de rouleau (2, 3),
- une électronique de commande (8) pour ledit moteur (5) qui est solidaire en rotation avec l'axe de rouleau (2) et
- une enveloppe de rouleau (9) disposée en rotation autour de l'axe de rouleau (2, 3, 4) et qui est reliée solidaire en rotation à un rotor (7) dudit moteur (5),
**caractérisé par**
un manchon (10) disposé entre les bobines de stator (6) et l'électronique de commande (8) et concentriquement à l'axe de rouleau (2) et solidaire en rotation avec celui-ci, dans lequel manchon sont intégrés ou pressés des conducteurs électriques (11) qui sont adaptés pour un contact électrique entre les bobines de stator (6) et l'électronique de commande (8) et comprennent des contacts enfichables (12) qui sont agencés pour être enfichés dans une première plaque de circuit électronique (13) portant l'électronique de commande (8) ou dans un dispositif de connexion disposé sur celle-ci.

2. Rouleau de transport (1) selon la revendication 1, **caractérisé en ce que** les conducteurs électriques (11) sont disposés le long de l'axe de rouleau (2).

3. Rouleau de transport (1) selon la revendication 1, **caractérisé en ce que** les conducteurs électriques (11) comprennent une partie orientée radialement.

4. Rouleau de transport (1) selon l'une des revendications 1 à 3, **caractérisé par** une deuxième plaque de circuit électronique (14) disposée du côté du stator, qui comprend des conducteurs pour un raccordement électrique des bobines de stator (6) audit manchon (10).

5. Rouleau de transport (1) selon la revendication 4, **caractérisé en ce que** les conducteurs électriques (11) comprennent des contacts enfichables (15) qui sont agencés pour être enfichés dans la deuxième plaque de circuit électronique (14) ou dans un dispositif de connexion disposé sur celle-ci.

6. Rouleau de transport (1) selon l'une des revendications 1 à 5, **caractérisé par** un palier à roulement (16) qui est disposé sur ledit manchon (10).

7. Rouleau de transport (1) selon la revendication 6, **caractérisé en ce que** ledit palier à roulement (16) est adapté pour supporter l'enveloppe (9) du rouleau de manière rotative par rapport à l'axe du rouleau (2, 3, 4) du rouleau de transport (1).

8. Rouleau de transport (1) selon l'une des revendications 1 à 7, **caractérisé en ce que** le manchon (10) est réalisé en matière plastique ou en céramique.
